# EUROPÄISCHE PATENTSCHRIFT

(11) **EP 3 286 461 B1**
(45) Veröffentlichungstag und Bekanntmachung des Hinweises auf die Patenterteilung: **11.12.2019**
(21) Anmeldenummer: 16721098.8
(22) Anmeldetag: 20.04.2016
(51) Int. Cl.: F16J 9/08

(54) **KOLBEN-ZYLINDER-ANORDNUNG FÜR EINEN KOLBENKOMPRESSOR MIT EINEM SPEZIELLEN DYNAMISCH ABDICHTENDEN KOLBENRING**
PISTON-CYLINDER ASSEMBLY FOR A PISTON COMPRESSOR HAVING A SPECIFIC DYNAMICALLY SEALING PISTON RING
ENSEMBLE PISTON-CYLINDRE POUR UN COMPRESSEUR À PISTON AVEC UN SEGMENT D'ÉTANCHÉITÉ DYNAMIQUE SPÉCIAL

(30) Priorität: 22.04.2015 DE 102015106163
(43) Veröffentlichungstag der Anmeldung: 28.02.2018
(73) Patentinhaber: KNORR-BREMSE Systeme für Schienenfahrzeuge GmbH, 80809 München (DE)
(72) Erfinder: LINNER, Martin, 84419 Schwindegg (DE); ZULTNER, Walter, 85368 Eching (DE); RECK, Vivian, 85354 Freising (DE)
(86) Internationale Anmeldenummer: PCT/EP2016/058727
(87) Internationale Veröffentlichungsnummer: WO 2016/169965

(56) Entgegenhaltungen:
- EP-A1- 2 685 140
- FR-A- 1 304 041
- US-A- 1 541 944

## Beschreibung

Die vorliegende Erfindung betrifft eine Kolben-Zylinder-Anordnung für einen Kolbenkompressor, umfassend einen Zylinderraum, den eine Zylinderlauffläche für einen Kolben begrenzt, der mit mindestens einer umlaufenden und einen Nutraum einschließenden Ringnut für die Aufnahme eines den Nutraum ebenfalls begrenzenden Kolbenrings zur dynamischen Abdichtung zwischen Kolben und Zylinderlauffläche versehen ist. Außerdem betrifft die Erfindung einen Kolbenkompressor, der eine solche Kolben-Zylinder-Anordnung umfasst.

Das Einsatzgebiet der Erfindung erstreckt sich insbesondere auf ölfreie Kolbenkompressoren für Schienenfahrzeuge. Bei solchen Kompressoren wird ein Kolben zur Verdichtung von Luft in einem Zylinderraum entlang einer Zylinderlauffläche geführt, die den Zylinderraum mit einem Kurbelgehäuse verbindet. Dabei soll möglichst verhindert werden, dass komprimierte Luft aus dem Zylinderraum in das Kurbelgehäuse eindringt. Zu diesem Zweck wird gewöhnlich ein Kolbenring verwendet, welcher in einer Ringnut des Kolbens eingesetzt ist, und welcher eine dynamische Abdichtung gegenüber der Zylinderlauffläche herstellt. Bei ölfreien Kolbenkompressoren kann ein zusätzlicher Ölabstreifring entfallen, der bei ölgeschmierten Kolbenkompressoren ein Eindringen von Schmieröl aus dem Kurbelgehäuse in den Zylinderraum verhindert.

Der Kolbenring liegt an der Zylinderlauffläche an und sorgt so für Dichtheit. Die dafür notwendige Anpresskraft setzt sich aus der Vorspannkraft nach Einbau, abhängig von Form und Abmessungen des Rings, und dem Luftdruck innerhalb der Ringnut auf der Kolbenringrückseite zusammen. Letztere ist zum Zylinderraum geöffnet und gegenüber dem Kurbelgehäuse abgedichtet. Der Kraftanteil *F* durch Druckbeaufschlagung ist somit abhängig vom Zylinderraumdruck *p* und der Fläche *A* der Innenseite des Kolbenrings der Ringdruckseite, *F* = *p* · *A.*

Da die Fläche A während der Komprimierung konstant bleibt, der Zylinderraumdruck p aber stark ansteigt, führt dies bei der Auslegung der Ringgeometrie zu einem Zielkonflikt. Denn mit dem Anstieg des Zylinderraumdrucks p soll zwar einerseits die Anpresskraft des Kolbenrings eine Verstärkung erfahren, um die Dichtheit zu gewährleisten. Allerdings soll andererseits, um die Reibung des Kolbenrings an der Zylinderinnenwand wegen der resultierenden Wärmeentwicklung und dem resultierenden Verschleiß zu begrenzen, die maximale Anpresskraft auf den Kolbenring herabgesetzt werden.

Aus der WO 2006/071344 A1 geht eine gattungsgemäße Kolben-Zylinder-Anordnung eines ölfreien Kolbenkompressors hervor, bei der eine Strömungsverbindung vom Zylinderraum zum Nutraum vorhanden ist, so dass der Kolbenring von durch den im Zylinderraum anliegenden Druck beaufschlagt und gegen die Zylinderlauffläche gepresst wird. Diese Strömungsverbindung entsteht durch einen Ringspalt, da der Radius des Kolbens etwas geringer ist als der Radius der Zylinderbohrung, so dass Luft in beide Richtungen zwischen Zylinderraum und Nutraum strömen kann. Zusätzlich ist die den Kolbenring aufnehmende Nut im Kolben etwas breiter als die Breite des Kolbenrings. Dadurch wird erreicht, dass der im Nutraum angeordnete Kolbenring stärker gegen die Zylinderlauffläche gepresst wird, wenn der Luftdruck im Zylinderraum steigt. Dies ist teilweise wünschenswert, denn ein erhöhter Luftdruck im Zylinderraum erfordert prinzipiell auch eine stärkere Abdichtung zum Kurbelgehäuse. Durch die unterschiedlichen Breiten von Nut und Kolbenring könnte ein einseitiger Verschleiß durch Verkippen des Kolbenrings relativ zum Kolben entstehen.

Nachteilhaft an dieser Lösung ist allerdings gleichzeitig, dass durch das stärkere Anpressen des Kolbenrings an die Zylinderlauffläche auch erhöhte Gleitreibung entsteht, und damit Erhitzung, stärkerer Verschleiß der beteiligten Komponenten und Effizienzverluste aufgrund der Bremswirkung der Gleitreibung.

Aus den Schriften FR 1 304 041 A und US 1 541 944 A gehen verschiedene Ausführungsformen für die Anordnung einer Strömungsverbindung vom Nutraum nach außen hervor.

Es ist die Aufgabe der vorliegenden Erfindung, eine Kolben-Zylinder-Anordnung für einen ölfreien Kolbenkompressor zu schaffen, deren Dichtwirkung bei steigender Druckbelastung automatisch ansteigt, und die gleichzeitig unerwünschte Reibungsverluste verringert.

Die Aufgabe wird gelöst durch eine Kolben-Zylinder-Anordnung gemäß dem Oberbegriff des Hauptanspruchs in Verbindung mit dessen kennzeichnenden Merkmalen. Die nachfolgenden abhängigen Ansprüche geben vorteilhafte Weiterbildungen der Erfindung wieder.

Die Erfindung schließt die technische Lehre ein, dass zwischen dem Nutraum im Kolben und dem Zylinderraum eine im oder am Kolben angeordnete bedüste Strömungsverbindung vorgesehen ist, um einen Druckausgleich im Nutraum gegenüber dem Zylinderraum zeitlich gesteuert zu verzögern.

Der Vorteil einer solchen bedüsten, also gedrosselten, Strömungsverbindung kann darin gesehen werden, dass der Druck im Nutraum langsamer ansteigt als der Druck im Zylinderraum. Der Druck im Nutraum gleicht sich somit nur zeitlich verzögert an den Druck im Zylinderraum an. Dadurch wird bei den zyklischen Kompressionsvorgängen eines Kolbenkompressors erreicht, dass der maximale Nutraumdruck, der den Kolbenring beaufschlagt und gegen die Zylinderlauffläche presst, stets geringer ist als der Zylinderraumdruck. Dies bewirkt eine Reduktion unerwünschter Reibverluste und reduziert den Verschleiß und die Wärmeentwicklung des Kolbenkompressors.

Durch Dimensionierung des Strömungswiderstandes der Drosselstelle ist es zusätzlich möglich, den Nutraumdruck in einen gewünschten Bereich zu beschränken. Der maximale erreichbare Nutraumdruck kann hierdurch eingestellt werden. Bei einem verschwindend geringen Strömungswiderstand ist der maximale Druck identisch zu dem im Zylinderraum, mit der Folge einer hohen Dichtwirkung aber auch nachteilhaft erhöhter Reibung. Bei einem effektiv unendlich hohen Strömungswiderstand, also bei pneumatischer beziehungsweise hydraulischer Abschottung des Nutraums, würde der Druck im Nutraum im Wesentlichen konstant bleiben. Dies hätte zwar den Vorteil minimaler Reibung, aber auch den Nachteil verminderter Dichtwirkung. Die Erfindung ermöglicht eine dimensionierbare Dichtwirkung und Reibung zwischen beiden Extremen.

Die bedüste Strömungsverbindung ist zwischen Nutraum und Zylinderraum als mindestens eine Düsenbohrung im Kolben ausgebildet, welche vom Randbereich des Kolbenbodens ausgeht und in den Nutraum einmündet. Der Vorteil ist hier darin zu sehen, dass diese Strömungsverbindung fertigungstechnisch sehr einfach herstellbar ist und mit unveränderten im Markt erhältlichen Kolbenringen funktioniert. Es ist auch denkbar, eine standardisierte Düse als eigenständiges Bauteil in eine Bohrung im Kolben einzusetzen.

Eine andere, nicht zur Erfindung gehörende Ausführungsform sieht vor, dass die bedüste Strömungsverbindung zwischen Nutraum und Zylinderraum als mindestens eine Düsenfräsung im Flankenbereich der Ringnut ausgebildet ist, welche vom Rand der Ringnut ausgehend zum Nutboden verläuft. Der Vorteil besteht auch hier insbesondere in der konstruktiv einfachen Gestaltung, die beispielsweise durch lokales Zerspanen der Oberfläche der Ringnut erzeugt werden kann. Eine Düsenfräsung ist also prinzipiell eine Einkerbung oder anders geartete Ausnehmung in Form eines Kanals, durch den eine Strömungsverbindung direkt am Kolbenring vorbei ermöglicht wird.

Eine nicht zur Erfindung gehörende Ausführungsform besteht darin, dass die bedüste Strömungsverbindung zwischen Nutraum und Zylinderraum als Düsenfräsung im Flankenbereich seitens des Kolbenrings ausgebildet ist. Vorteilhaft daran ist, dass lediglich der Kolbenring modifiziert werden muss und beispielsweise zur Änderung des Strömungswiderstandes in einfacher Weise ausgetauscht werden kann.

Diese genannten Ausführungsformen werden dadurch weiter verbessert, dass Kolbenring passungsgenau in die Ringnut eingesetzt ist. Dies bedeutet, dass zwischen beiden Bauteilen eine Passung besteht, die zwar eine radiale relative Bewegung zueinander zulässt, nicht jedoch ein Spaltmaß in Axialrichtung bei den einander zur Anlage kommenden Bereichen besteht, das einen Leckagestrom zulässt.

Der Vorteil besteht hierbei darin, dass sichergestellt wird, dass eine Strömungsverbindung nur durch die jeweilige dafür vorgesehenen Düsen in Form mindestens einer Bohrung oder Kanal stattfindet, und nicht zusätzlich durch einen axialen Ringspalt zwischen Kolbenring und Kolben.

Eine weitere, nicht zur Erfindung gehörende Ausführungsform sieht ferner vor, dass die bedüste Strömungsverbindung zwischen Nutraum und Zylinderraum als radialer Ringspalt zwischen Kolbenring und axial breiterer Ringnut ausgebildet ist. Vorteilhaft hieran ist die konstruktiv einfache Gestaltung, bei der auf Bohrungen oder Fräsungen verzichtet wird, und bei der die Düsenwirkung über geometrisch geschickte Dimensionierung der Bauteile erzeugt wird. Wenn der Kolbenring in axialer Richtung nur geringfügig schmaler ist als die Ringnut, wirkt der dazwischen angeordnete schmale Ringspalt auf die Strömungsverbindung drosselnd. Das Maßverhältnis ist hierbei so eng zu wählen, dass andererseits keine Verkippgefahr des Dichtrings besteht.

Alternativ aber ebenfalls nicht zur Erfindung gehörend kann die bedüste Strömungsverbindung zwischen Nutraum und Zylinderraum auch als axialer Ringspalt zwischen einem Kolbensteg des Kolbens und der Zylinderlauffläche ausgebildet sein. Der Kolbensteg ist der Teil des Kolbenmantels zwischen Kolbenboden und Ringnut. Wenn der Radius des Kolbenstegs geringfügig geringer ist als der Radius der Zylinderbohrung beziehungsweise der Zylinderlauffläche, wirkt der dazwischen angeordnete Ringspalt auf die Strömungsverbindung drosselnd.

Vorzugsweise ist der Kolbenring als ein offener Ring mit gasdichtem Stoß ausgebildet und besteht aus einem spritzgegossenen Kunststoff, beispielsweise aus PTFE, was eine einfache und genau reproduzierbare Herstellung ermöglicht.

Weitere, die Erfindung verbessernde Maßnahmen werden nachstehend mit der Beschreibung von bevorzugten Ausführungsformen der Erfindung anhand der Figuren näher dargestellt. Es zeigen jeweils schematisch:
- Figur 1: einen teilweise Längsschnitt durch eine Kolben-Zylinder-Anordnung mit Düsenbohrung im Kolben,
- Figur 2: einen teilweise Längsschnitt durch eine Kolben-Zylinder-Anordnung mit Düsenfräsung im Kolben, (gehört nicht zur Erfindung)
- Figur 3: einen teilweise Längsschnitt durch eine Kolben-Zylinder-Anordnung mit Düsenfräsung im Kolbenring, (gehört nicht zur Erfindung)
- Figur 4: einen teilweise Längsschnitt durch eine Kolben-Zylinder-Anordnung mit radialem Ringspalt am Kolbenring, (gehört nicht zur Erfindung)
- Figur 5: einen teilweise Längsschnitt durch eine Kolben-Zylinder-Anordnung mit axialem Ringspalt am Kolben, (gehört nicht zur Erfindung)
- Figur 6: eine graphische Darstellung zur Verdeutlichung der Funktionsweise der Erfindung.

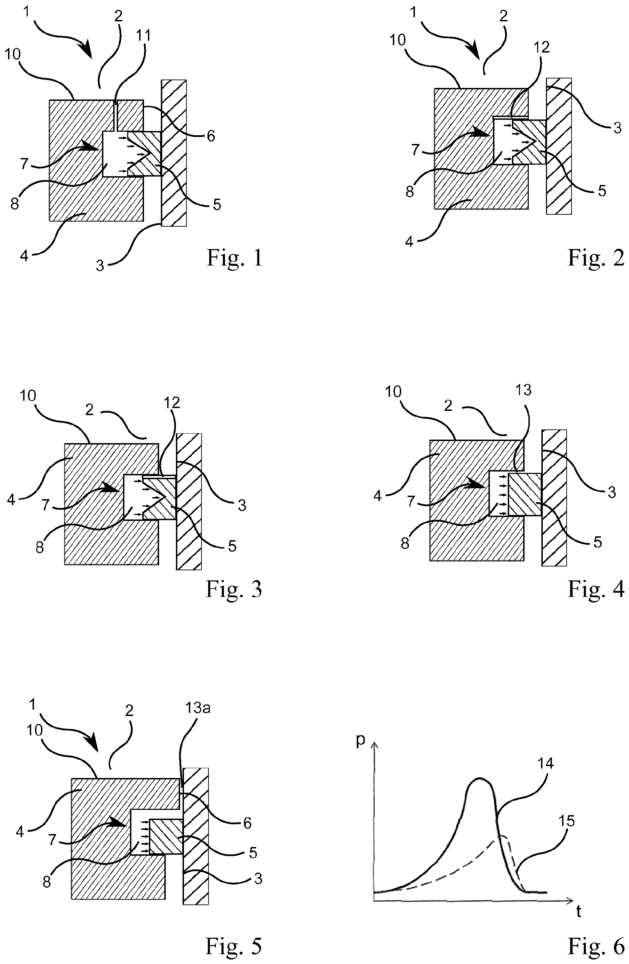

Gemäß Figur 1 umfasst eine teilweise dargestellte Kolben-Zylinder-Anordnung 1 einen Zylinderraum 2, der seitlich von einer Zylinderlauffläche 3 zur Aufnahme eines zylindrischen Kolbens 4 begrenzt ist. An der Zylinderlauffläche 3 kommt ein Kolbenring 5 zu Anlage, der in einem Nutraum 8 einer Ringnut 7 des Kolbens 4 angeordnet ist. Der Kolben 4 weist zwischen dessen Kolbenboden 10 und Ringnut 7 einen axialen Kolbensteg 6 auf. Der Kolbenring 5 besitzt in diesem Ausführungsbeispiel einen nicht-quaderförmigen Querschnitt, indem dieser entlang des Innenumfangs innenprofiliert ausgebildet ist, um die Dichtwirkung in Richtung Nutflanken der Ringnut 7 zu erhöhen.

Der Nutraum 8 ist durch eine Düsenbohrung 11 bedüst mit dem Zylinderraum 2 strömungsverbunden. Dadurch ist eine zeitliche Verzögerung des Druckausgleichs zwischen Zylinderraum 2 und Nutraum 8 gewährleistet. Insbesondere ist der Druck im Nutraum 8 geringer als der Druck im Zylinderraum 2, wodurch die Anpresskraft, symbolisiert durch die auf den Kolbenring deutenden Pfeile, geringer ist als bei einer freien, unbedüsten Strömungsverbindung von Zylinderraum 2 zu Nutraum 8.

Figur 2 gehört nicht zur Erfindung, demgemäß ist zur bedüsten Strömungsverbindung zwischen Nutraum 8 und Zylinderraum 2 mindestens eine Düsenfräsung 12 im Flankenbereich der Ringnut 7 vorgesehen. Dadurch entsteht ein zeitverzögerter Druckausgleich zwischen Zylinderraum 2 und Nutraum 8, und somit eine geringere Kraft (symbolisiert durch die Pfeile) der Anpressung des Kolbenrings 5 gegen die Zylinderlauffläche 3.

In Figur 3, die ebenfalls nicht zur Erfindung gehört, ist eine Kolben-Zylinder-Anordnung 1 mit Düsenfräsung 12 im Flankenbereich des Kolbenrings 5 illustriert. Die bedüste Strömungsverbindung entsteht also so wie in dem in Figur 2 dargestellten Ausführungsbeispiel zwischen Kolbenring 5 und Ringnut 7, allerdings ist die betreffende Ausnehmung in Form der Düsenfräsung 12 hier in dem Kolbenring 5 angeordnet.

Figur 4, die ebenfalls nicht zur Erfindung gehört, zeigt eine Kolben-Zylinder-Anordnung 1 mit einem schmalen radial gerichteten Ringspalt 13 zwischen dem im Querschnitt quaderförmigen Kolbenring 5 und der Ringnut 7. Dieser Ringspalt 13 entsteht, da die axiale Breite des Kolbenrings 5 geringfügig schmaler ist als die axiale Breite der Ringnut 7. Der Ringspalt 13 ist derart dimensioniert, dass dieser strömungstechnisch als Düse zur Drosselung des Luftflusses aus dem Zylinderraum 2 in den Nutraum 8 wirkt.

Figur 5, die ebenfalls nicht zur Erfindung gehört, zeigt eine Kolben-Zylinder-Anordnung 1 mit axialem Ringspalt 13a zwischen Kolbensteg 6 und der Zylinderlauffläche 3. Dieser Ringspalt 13a entsteht, da der Radius des zylinderförmigen Kolbenstegs 6 geringfügig geringer ist als der Radius der die Zylinderbohrung ummantelnden Zylinderlauffläche 3. Der Ringspalt 13a ist derart dimensioniert, dass dieser auch hier strömungstechnisch als Düse zur Drosselung des Luftflusses aus dem Zylinderraum 2 in den Nutraum 7 wirkt.

Figur 6 zeigt ein Koordinatensystem, in dem der Druck p über der Zeit t aufgetragen ist. Darin aufgetragen sind zwei Graphen, die den Zylinderraumdruck 14 und den Nutraumdruck 15 darstellen. Der Nutraumdruck 15 beaufschlagt den Kolbenring und ist daher für erhöhte Gleitreibung und Verschleiß sowie verminderte Effizienz verantwortlich. Wie zu erkennen ist, steigt der Nutraumdruck 15 aufgrund der bedüsten Strömungsverbindung erst zeitverzögert nach dem Zylinderraumdruck 14 an und erreicht daher, aufgrund der zyklischen Funktionsweise des Kolbenkompressors, nie dessen maximalen Druck. Die Reibung wird also, aufgrund der Proportionalität von beaufschlagendem Druck und resultierender Kraft, gegenüber einer Kolben-Zylinder-Anordnung 1 mit ungedrosselter Strömungsverbindung, entsprechend reduziert.

Die Erfindung ist nicht beschränkt auf das vorstehend beschriebene Ausführungsbeispiel. Es sind vielmehr auch Abwandlungen hiervon denkbar, welche vom Schutzbereich der nachfolgenden Ansprüche mit umfasst sind. So ist es beispielsweise auch möglich, mehr als eine, gegebenenfalls viele beispielsweise gleichmäßig über die Ringnut verteilte Düsenbohrungen oder separate im Kolben eingesetzte Düsen als Mittel zur bedüsten Strömungsverbindung zu verwenden. Solche Düsen müssen nicht notwendigerweise als kreisrunde Bohrungen ausgebildet sein, sondern können beispielsweise als länglicher Spalt oder Schlitz geformt sein.

Auch ist denkbar, dass ein freier Bereich eines gasdichten Stoßes eines Nutrings oder Kolbenrings als bedüste Strömungsverbindung ausgeführt ist. Dies ist insbesondere dann vorteilhaft, wenn mit geringen Temperaturschwankungen zu rechnen ist, und die Breite des freien Bereichs des Stoßes, der zum Ausgleich von temperaturbedingten Längenveränderungen des Kolbenrings dienen soll, somit relativ konstant bleibt.

### Bezugszeichenliste

- 1: Kolben-Zylinder-Anordnung
- 2: Zylinderraum
- 3: Zylinderlauffläche
- 4: Kolben
- 5: Kolbenring
- 6: Kolbensteg
- 7: Ringnut
- 8: Nutraum
- 9: Stoß
- 10: Kolbenboden
- 11: Düsenbohrung
- 12: Düsenfräsung
- 13, 13a: Ringspalt
- 14: Zylinderraumdruck
- 15: Nutraumdruck

## Patentansprüche

1. Kolben-Zylinder-Anordnung (1) für einen Kolbenkompressor, umfassend einen Zylinderraum (2), den eine Zylinderlauffläche (3) für einen Kolben (4) begrenzt, der mit mindestens einer umlaufenden und einen Nutraum (8) einschließenden Ringnut (7) für die Aufnahme eines den Nutraum (8) ebenfalls begrenzenden Kolbenrings (5) zur dynamischen Abdichtung zwischen Kolben (4) und Zylinderlauffläche (3) versehen ist, wobei zwischen dem Nutraum (8) im Kolben (4) und dem Zylinderraum (2) eine im oder am Kolben (4) angeordnete bedüste Strömungsverbindung vorgesehen ist, um einen Druckausgleich im Nutraum (8) gegenüber dem Zylinderraum (2) zeitlich gesteuert zu verzögern, **dadurch gekennzeichnet, dass** die bedüste Strömungsverbindung zwischen Nutraum (8) und Zylinderraum (2) als mindestens eine Düsenbohrung (11) im Kolben (4) ausgebildet ist, welche vom Randbereich des Kolbenbodens (10) ausgeht und in den Nutraum (8) einmündet (Fig. 1), um den Druckausgleich im Nutraum (8) gegenüber dem Zylinderraum zeitlich gesteuert zu verzögern.

2. Kolben-Zylinder-Anordnung (1) nach Anspruch 1,
**dadurch gekennzeichnet, dass** der Kolbenring (5) passungsgenau in die Ringnut (7) eingesetzt ist.

3. Kolben-Zylinder-Anordnung (1) nach Anspruch 1 oder 2,
**dadurch gekennzeichnet, dass** der dynamisch dichtende Kolbenring (5) entlang des Innenumfangs innenprofiliert ausgebildet ist, um die Dichtwirkung in Richtung Nutflanken der Ringnut (7) zu erhöhen.

4. Kolben-Zylinder-Anordnung (1) nach einem der vorstehenden Ansprüche,
**dadurch gekennzeichnet, dass** der Kolbenring (5) als offener Ring mit gasdichtem Stoß ausgebildet ist und aus einem spritzgegossenem Kunststoff besteht.

5. Kolbenkompressor zur Erzeugung von Druckluft mit mindestens einer Kolben-Zylinder-Anordnung (1) nach einem der Ansprüche 1 bis 4.

## Claims

1. A piston-cylinder arrangement (1) for a piston compressor, comprising a cylinder chamber (2) that is delimited by a cylinder running surface (3) for a piston (4) that is provided with at least one circumferential ring groove (7) enclosing a groove space (8) for receiving a piston ring (5), which also delimits the groove space (8), for the creation of a dynamic seal between the piston (4) and the cylinder running surface (3), there being provided between the groove space (8) in the piston (4) and the cylinder chamber (20) a jet-flow connection arranged in or on the piston (4) in order to delay pressure equalisation in the groove space (8) relative to the cylinder chamber (2) in a time-controlled manner,
**characterised in that** the jet-flow flow connection between the groove space (8) and the cylinder chamber (2) takes the form of at least one nozzle bore (11) in the piston (4) that leads from the edge region of the piston crown (10) and opens into the groove space (8) (Fig. 1) in order to delay pressure equalisation in the groove space (8) relative to the cylinder chamber in a time-controlled manner.

2. A piston-cylinder arrangement (1) according to claim 1,
**characterised in that** the piston ring (5) is inserted into the ring groove (7) so as to fit exactly.

3. A piston-cylinder arrangement (1) according to claim 1 or 2,
**characterised in that** the dynamically sealing piston ring (5) is formed with an inner profile along the inner circumference in order to increase the sealing effect in the direction of the groove flanks of the ring groove (7).

4. A piston-cylinder arrangement (1) according to any one of the preceding claims,
**characterised in that** the piston ring (5) takes the form of an open ring with a gas-tight butt joint and consists of an injection-moulded plastic.

5. A piston compressor for the production of compressed air, having at least one piston-cylinder arrangement (10) according to any of claims 1 to 4.

## Revendications

1. Agencement (1) piston-cylindre d'un compresseur à piston, comprenant un espace (2) de cylindre, qui délimite une surface (3) cylindrique de passage d'un piston (4), qui est pourvu, pour l'étanchéité dynamique entre le piston (4) et la surface (3) cylindrique de passage, d'au moins une rainure (7) annulaire, faisant le tour et enfermant un espace (8) de rainure de réception d'un segment (5) de piston, délimitant également l'espace (8) de rainure, dans lequel il est prévu, entre l'espace (8) de rainure du piston (4) et l'espace (2) de cylindre, une communication d'écoulement projeté, disposée dans ou sur le piston (4), afin de retarder, d'une manière commandée dans le temps, une compensation de pression dans l'espace (8) de rainure par rapport à l'espace (2) de cylindre,
**caractérisé en ce que** la communication d'écoulement projeté entre l'espace (8) de rainure et l'espace (2) de cylindre est constituée sous la forme d'au moins un trou (11) formant buse dans le piston (4), trou, qui part de la partie de bord du fond (10) du piston et débouche dans l'espace (8) de rainure (Fig. 1), afin de retarder, de manière commandée dans le temps, la compensation de pression dans l'espace (8) de rainure par rapport à l'espace de cylindre.

2. Agencement (1) piston-cylindre suivant la revendication 1,
**caractérisé en ce que** le segment (5) de piston est inséré avec précision d'ajustement dans la rainure (7) annulaire.

3. Agencement (1) piston-cylindre suivant la revendication 1 ou 2,
**caractérisé en ce que** le segment (5) de piston d'étanchéité dynamique est constitué avec profilage intérieur le long du pourtour intérieur, afin d'augmenter l'effet d'étanchéité en direction des flancs de la rainure (7) annulaire.

4. Agencement (1) piston-cylindre suivant l'une des revendications précédentes,
**caractérisé en ce que** le segment (5) de piston est constitué sous la forme d'un segment ouvert à coupure étanche au gaz et est en une matière plastique moulée par injection.

5. Compresseur à piston pour produire de l'air comprimé, ayant au moins un agencement (1) piston-cylindre suivant l'une des revendications 1 à 4.
